# EUROPEAN PATENT APPLICATION

(11) **EP 2 015 269 A1**
(43) Date of publication of application: **14.01.2009**
(21) Application number: 08007374.5
(22) Date of filing: 15.04.2008
(51) Int. Cl.: G08B 13/00, G06K 19/06

(54) **Improvements in or relating to container systems used to supply goods during journeys**

(30) Priority: 16.04.2007 GB 0707271
(71) Applicant: Alpha ASD, Ltd., Astmoor, Runcorn Cheshire WA7 1PR (GB)
(72) Inventor: Winter, Ian Paul Roy, Tarporley Cheshire CW 6 0DQ (GB); Parry, Thomas John, Runcorn Cheshire WA7 4AX (GB); Reseigh, Kenneth Christopher, Hounslow Middlesex TW3 2RF (GB)
(74) Representative: Geary, Stephen

(57) **Abstract**

Containers used in journeys such as for the provision of food and drink or merchandise on aircraft and trains are provided with unique individual identifiers which can be read to determine the location and status of the container enabling improved management of a fleet of containers that may be employed globally..

## Description

The present invention relates to improvements in or relating to mobile or portable container systems that are used in transportation vehicles for transporting and delivery of materials such as food and drink trolleys, containers for merchandise and other goods. These systems are widely used in aircraft and trains. The invention is particularly concerned with such systems when used for delivery of food and drink and merchandise in aircraft.

The container systems with which the present invention is concerned are usually loaded with the desired contents at a location remote from the point of delivery of the contents and are transported loaded to the point of use. Once the journey to which they relate has been completed the container is moved to another location for cleaning, and/or replenishment and/or to wait until it is next required. It will be appreciated that this can lead to uncertainties on the location of the containers and the need for a surplus of containers in order to ensure that there are sufficient containers available for all impending journeys. The extent of the issue is illustrated by the fact that as many as 120 containers can be required for one journey of a Boeing 747 and such an aircraft requires 3 sets of containers for operational purposes. (One in flight; one in transit & one in replenishment). This means an allocation of 360 containers per single Boeing 747 aircraft and it is estimated that over six million of these containers are in service worldwide.

The cycle of use of the containers with which the present invention is concerned also leaves the containers and their contents vulnerable to theft and it is estimated that some 2 % of global revenue from sales are lost each year due to theft. Although the seal system for containers employing the tamper evident lock described in our PCT Patent Application 2006011146 significantly enhances the security of the containers with which the present invention is concerned and provides a wide range of useful information concerning the container and its contents, there remains a need for a simple system which enables the location of such a container to be determined and which can be employed with or without the seal system described in our PCT Patent Application 2006011146.

The containers with which the present invention is concerned can be subjected to heavy handling and can become damaged and unsafe. For example if the braking system of a food and/or drink trolley employed on an aircraft is damaged and the aircraft experiences turbulence, the trolley can become a safety hazard. There is therefore a need for regular maintenance of such containers and for the provision of a maintenance schedule in relation to the containers.

The present invention therefore provides a system for the management of mobile and portable containers used in transportation systems.

It has been proposed that the location of container systems with which the present invention is concerned, may be monitored by the provision of tags on the container which may be activated by radio waves to emit a signal that can be detected to determine the location of the container. It has further been proposed that such a system may be used to monitor the location of the container throughout the cycle of a journey. These proposals suffer from two disadvantages. Firstly the containers tend to be made of metal, typically aluminium which can interfere with the performance of the radio frequency identification device. Secondly radio wave emission during a flight is likely to cause concern to regulatory authorities due to the risk of interference with the aircraft systems.

A further disadvantage is that the use of radio frequency identification does not, in itself, provide a tool for the management of a multi container system throughout the life of the system.

The present invention therefore provides a system for the management of containers used for the provision of goods during journeys in which the container is provided with a unique individual identifier which can be read automatically and the information obtained can be relayed to a container management data bank.

The invention is applicable to any containers that are used during journeys and are not an integral part of the vehicle performing the journey, such as an aircraft or a train. Examples of containers to which the present invention applies are wheeled containers such as trolleys that are used to contain food and drinks for passengers or merchandise that is to be sold such as duty free materials such as alcohol, tobacco, perfumes, gifts, jewellery and the like. The invention is also applicable to canisters which may not have wheels and can be used for the storage of merchandise. The term container is used herein to include both containers and canisters.

In a preferred embodiment of the present invention the unique individual identifier which is provided to the container is a bar code which can be read to obtain the information identifying the container. Accordingly the present invention further provides a container used for the provision of goods during journeys provided with a bar code on an external surface.

In the embodiment where the identifier is a bar code provided on the container the bar code should be robust so that it can withstand the handling to which the container is subjected during its cycle of operation and should be able to withstand several cycles of operation. The bar code should also be such that it can withstand the washing and sterilizing techniques to which containers, particularly those used for the provision of food and drink are subjected. These conditions can involve the use of hot water and/or steam sometimes at elevated pressure often with systems containing detergents. Preferably the bar code is provided in a tamperproof manner to avoid removal by would be thieves. In a preferred embodiment the bar code is provided securely attached to a metal plate which in turn can be securely attached to the container.

The bar code can provide any desired information to be read. It is however essential that it provides a unique individual identifier for the container in connection with which it is used. Optional additional information that could be provided can include the identity of the owner of the container, the type of container and the type of journey with which it is used, for example rail or aircraft journeys.

The present invention therefore provides a simple system that allows a container to be identified at any location and at any stage in the life cycle of a container. The system can be used to determine the location of a container as associated with a particular journey from storage through loading to delivery to the vehicle, use during the journey, removal from the vehicle, and delivery to cleaning and/or storage and/or replenishment for a subsequent journey.

In a preferred embodiment the information derived from reading the device on the container is transmitted to a database where it is stored to enable central management of a fleet of containers. The central database can be owned by one owner of the container or it can be a database storing information concerning containers owned by a plurality of owners in which access to information by each participant is limited to information concerning their own containers.

By downloading the information retrieved from the container it is possible to add information to the information that has been retrieved. For example, the bar code may be scanned using a hand held device and the information derived from the scan may be transferred to a personal computer where additional information is added prior to transferring the package of information to a central database. In this way it is possible to indicate, for example, that the container has been damaged and is in need of repair. In a further embodiment the use of the central database can provide reminders of when regular maintenance and servicing of a container may be required.

We have also found that the systems of the present invention enable enhanced knowledge concerning the location of containers and the type of containers that are at a particular location. In this way a fleet of containers can be managed to satisfy the requirements of impending journeys thus reducing the non use time of containers and reducing the number of containers required to satisfy particular journey requirements.

The present invention can be employed with new containers and it can also be employed by retrofitting identifiers such as bar codes to existing containers. Accordingly the invention further provides a bar code for attachment to a mobile or portable container that is used to supply materials in transportation vehicles, said bar code enabling individual identification of the container to which it is attached.

The systems of the present invention may be used together with the container seal system that is the subject of PCT Patent Application 2006011146. As is disclosed in PCT Patent Application 2006011146 the seal systems can be provided during the manufacture of the container or can be retrofitted. The seal of PCT Application 2006011146 can be a tamper-evident locking apparatus used with a container to be locked comprising a lock housing adapted to be fitted to the container and comprising a locking mechanism for locking and unlocking the container. A device can be provided within the lock housing for generating an identifier for the container and for generating an output upon locking and/or unlocking the locking mechanism; recording means for recording the output and optionally recording information relating to the time of the generation of the output; means for detecting or displaying the output externally of the lock housing whereby the output is recordable remotely of the locking apparatus.

When employing the techniques of PCT Patent Application 2006011146 the container is suitably locked or unlocked using a key although other means, for example a security code and keypad may be employed as desired. Preferably, the locking apparatus is self-contained and, optionally, does not require additional or external components except for a key in the case of a mechanical lock. As the container is successfully locked and unlocked the security code is changed on each locking operation and the output comprises the new security code. Information relating to the date and time of the locking and unlocking operation is suitably recorded and transferable remotely of the locking apparatus.

Preferably the output generated is random or is quasi-pseudo-random by which the output appears random to the user. By "quasi-pseudo-random" is meant a system which generates numbers in a manner which precludes the generation of the same number in succession. This is advantageous as known random number generators may generate the same number successively as the power supply diminishes.

The locking apparatus suitably comprises electronic and or magnetic sensors which provide an indication of attack by electronic or magnetic means which, desirably is recorded to provide evidence of tampering. Preferably the components of the locking apparatus are operably connected using means which are not susceptible to electronic attack, for example by magnetic switches. Suitably the apparatus comprises sensor magnets which upon detection of an external magnet trigger generation of a new output code and recordal of that fact and information relating to the time of generation of the new code thereby alerting the user to the possibility of an attempt at unauthorised access through magnetic attack.

The locking mechanism may be any suitable known locking mechanism but a cylinder lock is preferred.

The device in the lock housing for generating the output preferably comprises a microcontroller. In a preferred embodiment the locking/unlocking key comprises a multi-number code. The device in the lock housing suitably comprises a pre-programmed multi-digit code device of preferably five or more digits any of which can be numbered from zero to nine. When the seal system is provided to a container it can also provide a unique identifier for the container and can therefore be used to generate the unique identifier that can be read on the container and the creation of the seal can therefore generate the information required in the bar code of the preferred embodiment of the present invention. In this way the present invention can be used to supplement the information provided by the system of PCT Patent Application 2006011146 to provide a simple means of identifying the container and it's location as well as other activities that are performed in relation to the container .

In a preferred embodiment, the container comprises a seal system or locking system as described in PCT 2006011146, the disclosure of which is incorporated herein by reference. Preferably the locking or sealing system comprises a lock housing adapted to be fitted to the container and comprising a locking mechanism for locking and unlocking the container; a device within the lock housing for generating an output upon locking and/or unlocking the locking mechanism; recording means for recording the output and optionally recording information relating to the time of the generation of the output; means for detecting or displaying the output externally of the lock housing whereby the output is recordable remotely of the locking apparatus.

### The present invention is illustrated by reference to the accompanying drawings in which

Figure 1 shows a container provided with a bar code according to the present invention.

Figure 2 shows a canister provided with both a bar code according to the present invention and a seal system according to PCT Patent Application 2006011146.

Figure 3 is an information flow diagram showing how the information obtained from the bar code showed in Figure 1 can be read and transmitted to a database.

Figure 4 is a screen shot showing how the current location and life history of a container may be obtained from the database to enable effective management of a container fleet.

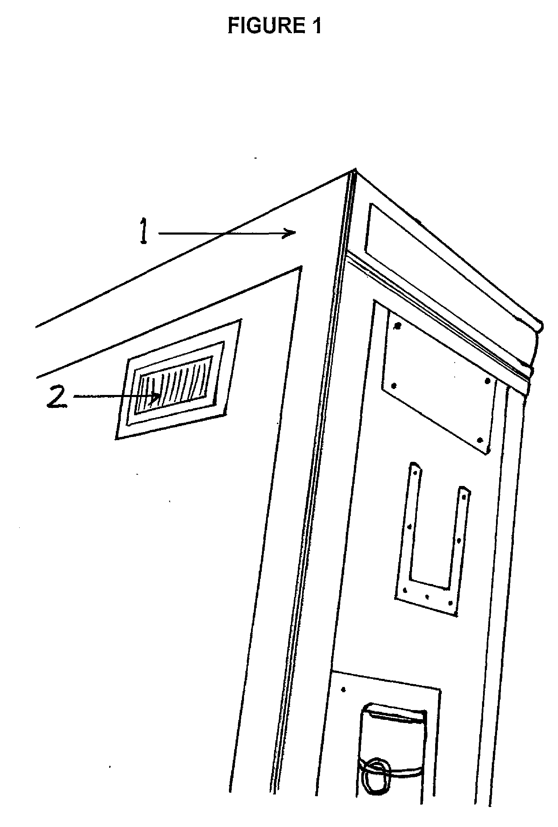

Figure 1 shows a container comprising a typical aircraft food service trolley (1) provided with a bar code (2) on the side to enable easy identification of the trolley.

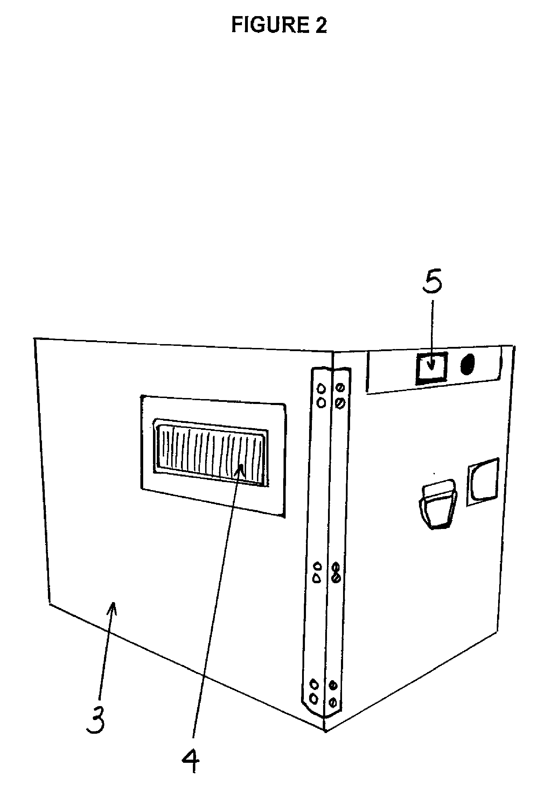

Figure 2 shows a canister (3) such as those used for the display and sale of duty free goods and other merchandise on aircraft similarly provided with a bar code (4) on the top of the canister to enable easy identification of the canister. The seal system of PCT Patent Application 2006011146 is shown at (5).

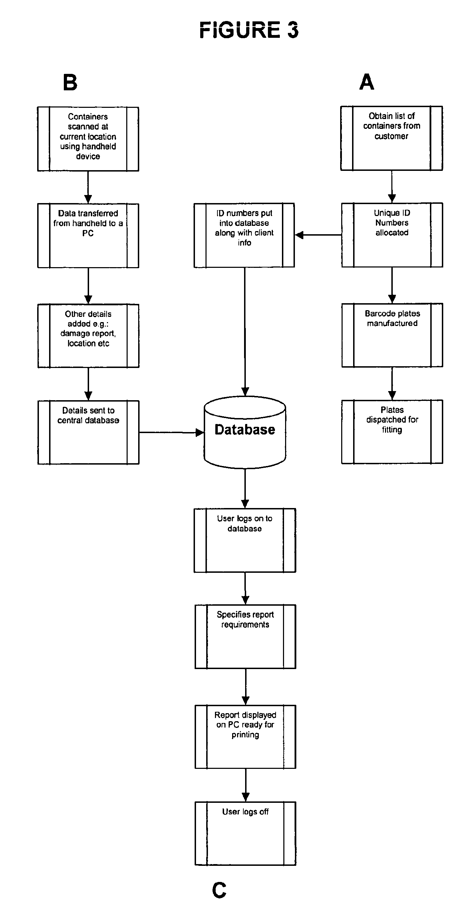

Figure 3 shows in column A how the container can be provided with a barcode identifier and the identifier entered into a central database used for the management of a fleet of containers.

Column B in Figure 3 shows how the information concerning a particular container can be obtained by scanning the barcode using a handheld reader, transferring the data from the reader to a PC, entering any other data that may be required into the PC and subsequently transferring the detailed information to the database.

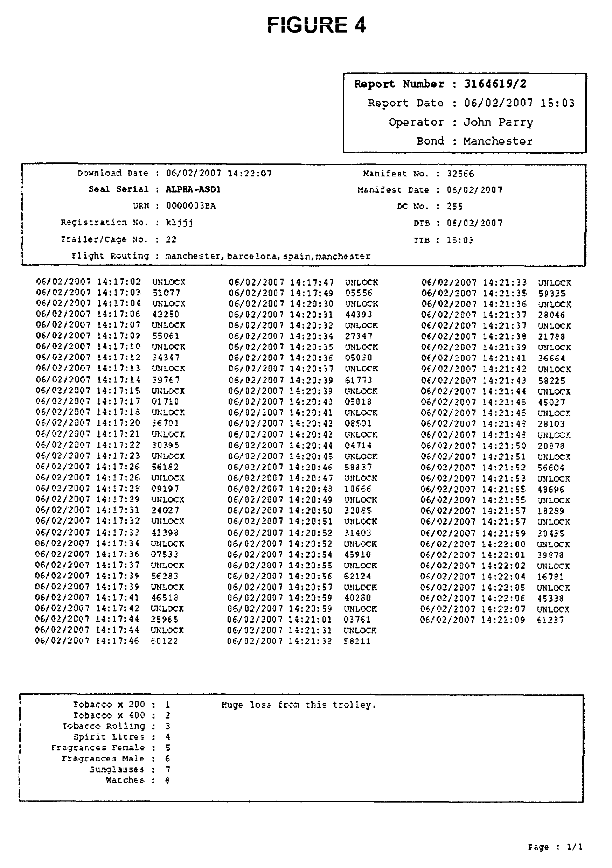

Column C in Figure 3 shows how a user can log on and interrogate the database to obtain a report of the activities relating to a trolley such as shown in Figure 4 and the system of the present invention enables the additional recordal of the location of the trolley when a particular activity occurs.

## Claims

1. A system for the management of containers used for the provision of goods during journeys in which the container is provided with a unique individual identifier which is readable automatically and the information obtained is relayable to a container management data base.

2. A system according to Claim 1 in which the container is a wheeled container.

3. A system according to claim 2 in which the container is a trolley used to contain food, drinks and/or merchandise.

4. A system according to any one of Claims 1 to 3 in which the unique individual identifier which is provided to the container is a bar code.

5. A system for the management of containers used for the provision of goods during journeys comprising a container provided with a unique individual identifier wherein the identifier is automatically readable and means for communicating information relating to the identifier to an external device or system.

6. A container used for the provision of goods during journeys provided with a bar code on an external surface.

7. A container according to Claim 6 in which the bar code is provided securely attached to a metal plate and optionally wherein the plate is adapted to be securely attached to the container.

8. A container according to Claim 6 or Claim 7 in which in addition to providing a unique individual identifier for the container in connection with which it is used the bar code identifies the owner of the container and optionally, the type of the container.

9. A container management system wherein information derived from reading a device located on the outside of the container is transmissible to a database where it is storable to enable central management of a fleet of containers.

10. A container management system according to Claim 9 in which information indicating that the container has been damaged and is in need of repair is transmissible to the database.

11. A container management system according to Claim 9 or Claim 10 adapted to receive information relating to reminders of the need for maintenance and servicing of a container from an external container management database.

12. A bar code for attachment to a mobile or portable container that is used to supply materials in transportation vehicles, said bar code enabling individual identification of the container to which it is attached.

13. Use of a system as defined in any one of claims 1 to 5 or 9 to 12 wherein the container comprises a seal system comprising a lock housing adapted to be fitted to the container and comprising a locking mechanism for locking and unlocking the container; a device within the lock housing for generating an output upon locking and/or unlocking the locking mechanism; recording means for recording the output and optionally recording information relating to the time of the generation of the output; means for detecting or displaying the output externally of the lock housing whereby the output is recordable remotely of the locking apparatus.

14. Use according to Claim 13 in which the seal system generates a unique identifier for the container which is provided on the means on the outside of the container that can be read.

15. Use according to Claim 13 or Claim 14 in which the creation of the seal generates the unique identifiers in a bar code to enable identification of the container.
